# EUROPEAN PATENT SPECIFICATION

(11) **EP 2 372 008 B1**
(45) Date of publication and mention of the grant of the patent: **24.08.2016**
(21) Application number: 11157249.1
(22) Date of filing: 08.03.2011
(51) Int. Cl.: D06F 37/00, D06F 37/26

(54) **A HOSE CO-MOULDABLE WITH WASHING MACHINE TUBS**
AN WASCHMASCHINENBEHÄLTER FORMBARER SCHLAUCH
TUYAU CO-MOULABLE AVEC DES CUVES DE MACHINE À LAVER

(30) Priority: 09.03.2010 IT TO20100181
(43) Date of publication of application: 05.10.2011
(73) Proprietor: Aktiebolaget SKF, 415 50 Göteborg (SE)
(72) Inventor: Mola, Roberto, 10129 Torino (IT); Scaltriti, Gianpiero, 10135 Torino (IT)
(74) Representative: Tedeschini, Luca

(56) References cited:
- EP-A1- 1 950 334
- WO-A2-2010/010114
- GB-A- 2 272 913

## Description

This invention refers to a tube that can be co-moulded with washing machine tubs.

In general, tubes that can be co-moulded with washing machine tubs are capable of becoming an integral part of the tubs in order to facilitate the washing machine assembly operations, and comprise:
- two rolling bearings arranged along an axis of rotation of a washing machine drum;
- a spacer interposed between the two bearings; and
- a cylindrical housing sleeve preferably made of a plastic material and by co-moulding around the two bearings and the spacer. See, for example, WO 2010/010114 A2.

When the tube has been co-moulded with the tub, a shaft of the drum is inserted through the tube in such a way as to engage both bearings and in such a way as to protrude axially from the tub in order to be engaged kinetically with a motor of the washing machine. At the end opposite the one engaged with the motor, i.e. on what is known as the "wet" side, and corresponds to the interior of the tub, the drum shaft also passes through a seal which prevents liquids from entering the tube and which is fitted inside a seat created in the tub in a position that is coaxial with the axis of rotation of the shaft.

The extreme severity of the current conditions of co-moulding by injection due to the very short production times and to the high injection pressures and temperatures has made the creation of the aforesaid seat highly critical in order to prevent irreversible deformations which, in the long term, could compromise the sealing capacities of the seal.

The object of this invention is to provide a tube that can be co-moulded with washing machine tubs and that is free from the above discussed drawbacks.

According to this invention, there is provided a tube as defined in claim 1. Preferred embodiments are defined in the dependent claims.

The invention will now be described with reference to the attached drawings which show a non-limiting exemplary embodiment, in which:
figure 1 is a front elevational view of a preferred embodiment of the co-mouldable tube of this invention;
   and
figure 2 is a cross-section of the tube of figure 1 along the line A-A.

With reference to the attached figures, numeral 10 designates in its entirety a tube co-mouldable with washing machine tubs. The tube 10 is capable of being co-moulded along with a tub, schematized in the figure and indicated at 11, of a washing machine in order to constitute a single component with the tub 11 in such a way as to reduce the washing machine production times. The tube 10 comprises:
- two rolling bearings 20 and 30 arranged along an axis of rotation A of a drum (known and not illustrated) of the washing machine;
- a spacer 40, preferably made of a metal material, interposed between the two bearings 20 and 30; and
- a housing sleeve 50 which, again with a view to optimizing production times and costs, is preferably made of a plastic material, by co-moulding around the two bearings 20 and 30 and the spacer 40.

When it has been co-moulded with the tub 11, the tube 10 defines a sort of pipe 12 communicating between a wet side 13 inside the tub 11 and a dry side 14 outside the tub 11, and capable of being engaged internally by a support shaft (known and not shown) which supports the abovementioned drum and is arranged inside the pipe 12 so as to protrude at least partly from the dry side 14.

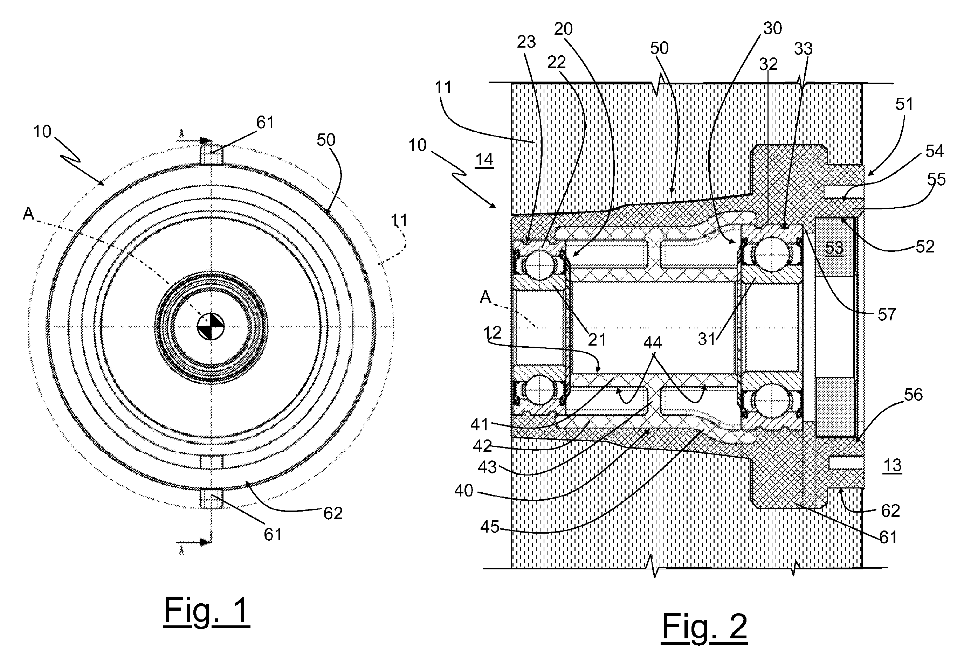

In order to reduce even further both the washing machine production costs and times, and also to increase the reliability of the watertight seal of the tub 11, the housing sleeve 50 comprises an annular rim 51, which faces the wet side 13, and protrudes axially vis-à-vis the bearing 30. The rim 51 extends coaxially with the axis A of rotation starting from the bearing 30, and defines a seat 52 for a sealing element, schematically indicated in figure 2 by numeral 53. The direct manufacturing of the seat 52 during co-moulding of the sleeve 50 with the bearings 20 and 30, instead of during co-moulding of the tub 11 with the tube 10, not only renders the production of the tub 11 simpler, but also allows to control the geometry of the seat 52 with greater accuracy and increase the reliability of the sealing element 53.

Considering, however, that the injection pressure, just like the temperature at which co-moulding the tub 11 with the tube 10 takes place, can reach values that are particularly high and critical for the materials involved, and considering the importance of maintaining the geometrical characteristics of the seat 52 identical to those obtained during co-moulding of the tube 10, the latter comprises an annular frontal groove 54 which is open axially from the wet side 13, and is capable of being engaged by a cylindrical stiffening body having a shape that is complementary to the shape of the groove 54 during co-moulding of the tub 11.

In particular, the annular groove 54 extends axially inside the rim 51 with an axial depth that is lower than an axial dimension of the edge 51, and a cylindrical bracket 55, the radial thickness of which is lower than an overall radial thickness of the rim 51, and which is radially delimited towards the outside of the seat 52. During co-moulding of the tub 11 with the tube 10, the abovementioned cylindrical stiffening body is inserted into the groove 54 in order to prevent any deformation of the bracket 55 while protecting the seat 52 from any possible deformation.

The seat 52, of cylindrical shape, is delimited axially on the wet side 13 by an inlet bevel 56 capable of favouring the insertion of the sealing element 53 inside the seat 52. On the side of the bearing 30, the seat 52 is axially delimited by a shoulder 57 which is interposed between the bearing 30 and the seat 52, and also defines an axial shouldering element for fitting the sealing element 53.

As the overall stiffness of the tube 10 also contributes to the maintenance of the form characteristics of the seat 52, the spacer 40 has a box-type structure defined by an internal cylindrical body 41, and by an outer shaped body 42 coaxial with the body 41 and joined to the body 41 by an intermediate radial partition wall 43. The bodies 41 and 42 with the partition wall 43 define two annular spaces 44, so that the overall weight of the spacer 40 is lower than the weight of a solid spacer with the same stiffness characteristics.

The internal cylindrical body 41 is axially separate from both the inner rings 21 and 31 of the bearings 20 and 30, while the overall axial dimension of the body 42 is greater than the axial dimension of the body 41 and is arranged both axially and radially in contact with both the outer rings 22 and 32 of the bearings 20 and 30.

As the radial dimensions of the bearing 30 are greater than the radial dimensions of the bearing 20, because it has to support a greater load as it is positioned closer to the aforementioned drum, the body 42, which is maintained parallel to the body 41 on the bearing 20 side, has, on the bearing 20 side, a conical portion 45 increasing its own outer diameter. In this way, each opposite end of the body 42 is arranged radially around and in contact with a portion of the outer rings 23 and 33 and, in the same way, defines an axial reference for the rings 23 and 33 with the univocal definition of an axial distance between the bearings 20 and 30, while allowing the bearings 20 and 30 to be locked in position when they are fitted in the mould for co-moulding the sleeve 50.

Furthermore, in order to increase the axial sealing between the sleeve 50 and the bearings 20 and 30, both the outer rings 22 and 32 are provided with respective pairs of outer grooves 23 and 33 which, during co-moulding of the sleeve 50, are filled with the same material as the sleeve 50.

Finally, the sleeve 50 comprises one or more radial antirotational teeth 61, each of which extends outside an outer surface 62 of the sleeve 50 to prevent any rotation between the tube 10 and the tub 11. There could also be only one of these radial teeth 61, but in order to give the entire tube 10 a symmetrical shape it is preferable to provide two teeth 61 arranged in symmetrical positions vis-à-vis the axis A.

It is intended that the invention not be limited to the embodiment described and illustrated herein, which is to be considered as an exemplary embodiment of the tube co-mouldable with washing machine tubs which is, instead, open to further modifications as regards shapes and arrangements of the parts, and construction and assembly details.

## Claims

1. A tube (10) co-mouldable with washing machine tubs (11), the tube (10) comprising:
- two rolling bearings (20, 30) arranged along a rotating axis (A) of a drum of the washing machine;
- a spacer (40) interposed between the bearings (20, 30); and
- a housing (50) which is made of plastic material moulded around the bearings (20, 30) and the spacer (40), the housing (50) comprising an annular rim (51) which axially projects from a first bearing (30) of the two bearings (20, 30) in a coaxial position with the rotating axis (A) and defines a seat (52) for a sealing element (53);
**characterized in that** the annular rim (51) is comprised of an annular frontal groove (54), which is axially open on one side (13) of the tube (10) and it is suitable for being engaged by a cylindrical stiffening body having a shape that is complementary to the shape of the groove (54) during co-moulding of the tub (11) with the tube (10).

2. A tube according to claim 1, **characterized in that** the annular groove (54) defines a cylindrical bracket (55) the radial thickness of which is smaller than the radial thickness of the annular rim (51) and is radially inwardly bounded by the seat (52).

3. A tube according to claim 2, **characterized in that** the housing (50) comprises a partitioning shoulder (57) between the seat (52) and the first bearing (30).

4. A tube according to any of the preceding claims, **characterized in that** the spacer (40) is provided with a box-type structure which is defined by a first body (41) and by a second body (42); the two bodies (41, 42) being coaxial to one another and being joined to each other by an intermediate radial partition wall (43).

5. A tube according to any of the preceding claims, **characterized in that** the housing (50) comprises at least one radial tooth (61) outwardly extending from an outer surface (62) of the housing (50) in order to define an anti-rotation element of the tube (10) with the tub (11).

## Patentansprüche

1. Schlauch (10), der mit Waschmaschinen-Waschbehälter (11) mitabformbar ist, wobei der Schlauch (10) Folgendes umfasst:
- zwei Wälzlager (20, 30), die entlang einer sich drehenden Achse (A) einer Trommel der Waschmaschine angeordnet sind,
- einen Abstandhalter (40), der zwischen den Lagern (20, 30) liegt, und
- ein Gehäuse (50), das aus um die Lager (20, 30) und den Abstandhalter (40) geformtem Kunststoffmaterial hergestellt ist, wobei das Gehäuse (50) einen ringförmigen Rand (51) umfasst, der in einer koaxialen Position mit der sich drehenden Achse (A) von einem ersten Lager (30) der beiden Lager (20, 30) axial vorragt und einen Sitz (52) für ein Dichtelement (53) definiert,
**dadurch gekennzeichnet, dass** der ringförmige Rand (51) aus einer ringförmigen Stirnnut (54) besteht, die an einer Seite (13) des Schlauchs (10) axial offen und geeignet ist, während des Mitabformens des Waschbehälters (11) mit dem Schlauch (10) von einem zylindrischen Versteifungskörper in Eingriff genommen zu werden, der eine Gestalt hat, die zu der Gestalt der Nut (54) komplementär ist.

2. Schlauch nach Anspruch 1, **dadurch gekennzeichnet, dass** die ringförmige Nut (54) eine zylindrische Halterung (55) definiert, deren radiale Dicke geringer als die radiale Dicke des ringförmigen Rands (51) ist und die radial nach innen durch den Sitz (52) begrenzt ist.

3. Schlauch nach Anspruch 2, **dadurch gekennzeichnet, dass** das Gehäuse (50) eine Trennschulter (57) zwischen dem Sitz (52) und dem ersten Lager (30) umfasst.

4. Schlauch nach einem der vorhergehenden Ansprüche, **dadurch gekennzeichnet, dass** der Abstandhalter (40) mit einer kastenartigen Struktur versehen ist, die durch einen ersten Körper (41) und einen zweiten Körper (42) definiert ist, wobei die beiden Körper (41, 42) zueinander koaxial und über eine radiale Zwischentrennwand (43) miteinander verbunden sind.

5. Schlauch nach einem der vorhergehenden Ansprüche, **dadurch gekennzeichnet, dass** das Gehäuse (50) mindestens einen radialen Zahn (61) umfasst, der sich von einer äußeren Fläche (62) des Gehäuses (50) nach außen erstreckt, um ein Antirotationselement des Schlauchs (10) mit dem Waschbehälter (11) zu definieren.

## Revendications

1. Tuyau (10) co-moulable avec des cuves de machine à laver (11), le tuyau (10) comprenant :
- deux paliers à roulements (20, 30) disposés le long d'un axe de rotation (A) d'un tambour de la machine à laver ;
- un élément d'espacement (40) interposé entre les paliers (20, 30) ; et
- un boîtier (50) qui est fabriqué en matière plastique moulée autour des paliers (20, 30) et de l'élément d'espacement (40), le boîtier (50) comprenant une bordure annulaire (51) qui fait saillie axialement depuis un premier palier (30) parmi les deux paliers (20, 30) dans une position coaxiale avec l'axe de rotation (A) et qui définit un siège (52) pour un élément d'étanchéité (53) ;
**caractérisé en ce que** la bordure annulaire (51) est constituée d'une gorge frontale annulaire (54) qui est ouverte axialement d'un côté (13) du tuyau (10) et qui est adaptée pour être amenée en prise avec un corps de rigidification cylindrique ayant une forme complémentaire de la forme de la gorge (54) au cours du co-moulage de la cuve (11) avec le tuyau (10).

2. Tuyau selon la revendication 1, **caractérisé en ce que** la gorge annulaire (54) définit une console cylindrique (55) dont l'épaisseur radiale est inférieure à l'épaisseur radiale de la bordure annulaire (51) et est bordée radialement vers l'intérieur par le siège (52).

3. Tuyau selon la revendication 2, **caractérisé en ce que** le boîtier (50) comprend un épaulement de cloisonnement (57) entre le siège (52) et le premier palier (30).

4. Tuyau selon l'une quelconque des revendications précédentes, **caractérisé en ce que** l'élément d'espacement (40) est pourvu d'une structure de type boîte qui est définie par un premier corps (41) et par un deuxième corps (42) ; les deux corps (41, 42) étant coaxiaux l'un à l'autre et étant réunis l'un à l'autre par une cloison radiale intermédiaire (43).

5. Tuyau selon l'une quelconque des revendications précédentes, **caractérisé en ce que** le boîtier (50) comprend au moins une dent radiale (61) s'étendant vers l'extérieur depuis une surface extérieure (62) du boîtier (50) afin de définir un élément antirotation du tuyau (10) avec la cuve (11).
